(19) Europäisches Patentamt
European Patent Office
Office européen des brevets

(11) **EP 4 010 232 B1**

(12) **FASCICULE DE BREVET EUROPEEN**

(45) Date de publication et mention de la délivrance du brevet:
**01.05.2024 Bulletin 2024/18**

(21) Numéro de dépôt: **20734553.9**

(22) Date de dépôt: **26.06.2020**

(51) Classification Internationale des Brevets (IPC):
**B60W 30/02** *(2012.01)*     **B60W 30/19** *(2012.01)*
**B60W 30/20** *(2006.01)*

(52) Classification Coopérative des Brevets (CPC):
**B60W 30/19; B60W 30/025; B60W 30/20;**
B60W 2520/10; B60W 2540/22; B60W 2540/221;
B60W 2552/15; B60W 2720/106

(86) Numéro de dépôt international:
**PCT/EP2020/068125**

(87) Numéro de publication internationale:
**WO 2021/023438 (11.02.2021 Gazette 2021/06)**

(54) **PROCÉDÉ D'ÉLABORATION D'UNE CONSIGNE DE PILOTAGE D'UN ORGANE D'UN VÉHICULE AUTOMOBILE**

VERFAHREN ZUR ERZEUGUNG EINER STEUERUNGSEINSTELLUNG FÜR EIN KRAFTFAHRZEUGBAUTEIL

METHOD FOR GENERATING A CONTROL SETTING FOR A MOTOR VEHICLE COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.08.2019 FR 1908973**

(43) Date de publication de la demande:
**15.06.2022 Bulletin 2022/24**

(73) Titulaire: **Ampere SAS**
**92100 Boulogne-Billancourt (FR)**

(72) Inventeurs:
• **CLOAREC, Guy-Michel**
**78114 Magny les Hameaux (FR)**
• **COLIN, Guillaume**
**45160 OLIVET (FR)**
• **SOLANO-ARAQUE, Edwin**
**78280 Guyancourt (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
| | |
|---|---|
| EP-A1- 3 508 391 | WO-A1-2016/197068 |
| CN-A- 108 639 061 | DE-A1- 19 954 552 |
| DE-A1-102017 208 283 | US-A1- 2018 297 600 |
| US-A1- 2018 335 776 | |

## Description

## Domaine technique de l'invention

La présente invention concerne de manière générale l'agrément de conduite des véhicules automobiles.

Elle concerne plus particulièrement un procédé d'élaboration d'une consigne de pilotage d'un organe de commande d'un véhicule automobile.

L'invention trouve une application particulièrement avantageuse dans le pilotage de tout organe ayant une influence sur l'accélération du véhicule automobile, tel que le moteur du véhicule, ou la boîte de vitesses, ou l'embrayage, ou le système de freinage.

## Etat de la technique

On cherche actuellement à développer des fonctions facilitant la conduite des véhicules automobiles, et notamment des fonctions de régulation de vitesse adaptative.

Ces fonctions de régulation de vitesse permettent d'adapter la vitesse du véhicule en fonction de l'environnement (limitation de vitesses, bouchons...) de façon autonome, c'est-à-dire sans intervention du conducteur, en agissant sur le moteur, sur la boîte de vitesse et sur le système de freinage.

Ces fonctions ont pour objectif de rendre la conduite des véhicules plus sure et plus agréable pour le conducteur et les passagers du véhicule.

Le caractère sûr de ces fonctions est obtenu en faisant en sorte que les consignes de pilotage transmises au groupe motopropulseur et aux freins assurent au véhicule une bonne tenue de route.

Le caractère agréable et confortable de ces fonctions est également essentiel pour s'assurer que l'usager les utilise. Or la perception du caractère agréable et confortable d'une fonction varie d'une personne à l'autre et varie en fonction de l'environnement. De ce fait, cet aspect n'est actuellement pas ou mal pris en compte lors de la conception des fonctions de conduite autonome de véhicules.

On connaît par ailleurs des documents *"BELLEM, Hanna, SCHÔNENBERG, Thorben, KREMS, Josef F., et al. - Objective metrics of comfort: developing a driving style for highly automated vehicles. Transportation research part F: traffic psychology and behaviour, 2016, vol. 41, p. 45-54"* ; *"BELLEM, Hanna, THIEL, Barbara, SCHRAUF, Michael, et al. - Comfort in automated driving: An analysis ofpreferences for different automated driving styles and their dependence on personality traits. Transportation research part F: traffic psychology and behaviour, 2018, vol. 55, p. 90-100"* et *"MÜLLER, Thomas, HAJEK, Hermann, RADIC-WEIβENFELD, Ljubica, et al. Can you feel the différence? the just noticeable différence of longitudinal acceleration. In : Proceedings of the Human Factors and Ergonomies Society Annual Meeting. Sage CA: Los Angeles, CA : SAGE Publications, 2013. p. 1219-1223"* une relation entre système vestibulaire humain et agrément de conduite.

CN108639061A décrit un système qui consiste à calculer une accélération susceptible d'éviter l'apparition du mal des transports.

On rappellera ici que le système vestibulaire est celui qui permet de ressentir les mouvements appliqués au corps humain.

A titre d'exemple de relation, le second document montre une préférence pour des manoeuvres d'accélération/décélération symétriques.

Les études décrites dans ces documents ne sont toutefois pas applicables telles quelles sur des véhicules automobiles et, de ce fait, ne permettent actuellement pas d'améliorer le confort des fonctions de conduite autonome des véhicules.

## Présentation de l'invention

Afin de remédier à l'inconvénient précité de l'état de la technique, la présente invention propose de prendre en compte le système vestibulaire lors de la conception des véhicules automobiles afin d'en améliorer le confort.

Plus particulièrement, on propose selon l'invention un procédé d'élaboration d'une consigne de pilotage d'un organe de commande d'un véhicule selon la revendication 1.

Ainsi, l'invention permet de déterminer si une manoeuvre de conduite autonome d'un organe du véhicule serait ou non acceptable du point de vue du confort du conducteur. Elle se basera notamment sur la proprioception humaine associée au système vestibulaire, mais aussi sur la psychologie et le ressenti du conducteur ainsi que sur l'influence de l'environnement.

L'invention peut être facilement implémentée sur un calculateur embarqué puis utilisée pour autoriser ou non l'envoi de consignes de commande aux organes du véhicule. Elle pourra aussi être utilisée en amont, lors de la conception des véhicules.

D'autres caractéristiques avantageuses et non limitatives du procédé conforme à 1 invention sont les suivantes :

- ladite consigne est élaborée de façon à ce que l'accélération du véhicule automobile et/ou la dérivée temporelle de l'accélération du véhicule automobile soit, en valeur absolue, inférieure à un seuil déterminé ;
- ledit seuil n'est pas le même selon que l'accélération est sensiblement constante ou est variable ;
- ledit seuil n'est pas le même si l'accélération du véhicule automobile et/ou la dérivée temporelle de l'accélération du véhicule automobile est positive ou négative ;
- le véhicule automobile roulant sur une route, ledit seuil est déterminé en fonction de la pente de la route et/ou en fonction de la vitesse du véhicule automobile ;

- il est prévu d'anticiper une manoeuvre d'évolution du véhicule automobile, tel que par exemple un changement de régime-moteur ou un changement de rapport de boîte de vitesse, en la discrétisant en différentes phases au cours de chacune desquelles l'accélération du véhicule automobile est considérée soit sensiblement constante, soit variant de façon linéaire ;

- lors des phases où l'accélération du véhicule automobile est anticipée comme étant sensiblement constante, ladite consigne est élaborée de façon à ce que l'accélération du véhicule automobile et/ou la dérivée temporelle de l'accélération du véhicule automobile reste comprise entre deux seuils de tolérance ;

- lors des phases où l'accélération du véhicule automobile est anticipée comme étant variable, ladite consigne est élaborée de façon à ce que la variation de dérivée temporelle de l'accélération du véhicule automobile reste comprise entre deux seuils de tolérance différents des seuils de tolérance utilisés lors des phases où l'accélération du véhicule automobile est anticipée comme étant sensiblement constante.

L'invention propose également un véhicule automobile comportant au moins un organe de commande qui est adapté à faire varier l'accélération du véhicule automobile, et un calculateur adapté à commander cet organe de façon à mettre en oeuvre le procédé d'élaboration précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

**Description détaillée de l'invention**

La description qui va suivre en regard des dessins annexés, donnés à titre d'exemples non limitatifs, fera bien comprendre en quoi consiste l'invention et comment elle peut être réalisée.

Sur les dessins annexés :

[fig.1] est une représentation schématique en coupe du système vestibulaire humain ;
[fig.2] est un graphique illustrant les variations de l'accélération et de la dérivée temporelle de l'accélération d'un véhicule automobile au cours d'un premier exemple de séquence d'évolution de ce véhicule automobile ;
[fig.3] est un graphique illustrant les variations de l'accélération et de la dérivée temporelle de l'accélération dans un deuxième exemple de séquence d'évolution du véhicule automobile ;
[fig.4] est un graphique illustrant les variations de l'accélération et de la dérivée temporelle de l'accélération dans un troisième exemple de séquence d'évolution du véhicule automobile ;
[fig.5] est un graphique illustrant les variations de l'accélération et de la dérivée temporelle de l'accélération dans un quatrième exemple de séquence d'évolution du véhicule automobile ; et
[fig.6] est une représentation schématique d'un véhicule automobile conforme à l'invention.

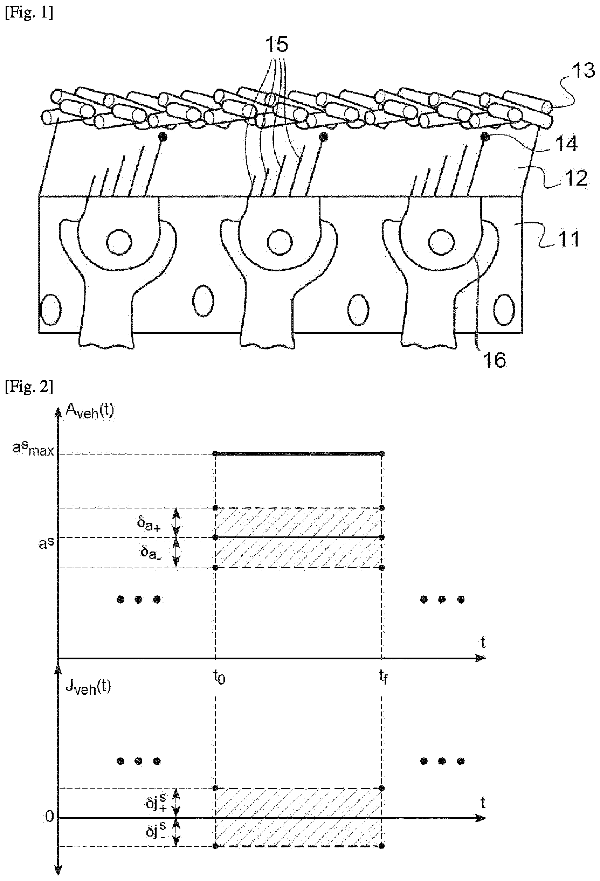

A titre préliminaire, on peut décrire brièvement l'anatomie du système vestibulaire humain, en relation avec la figure 1.

Le système vestibulaire est l'organe sensoriel qui détecte les sensations liées à l'équilibre. Il informe notamment le système nerveux central sur la position et les déplacements de la tête.

Il est constitué de deux sous-systèmes principaux, à savoir les canaux semi-circulaires qui sont associés aux rotations, et les organes otolithiques qui sont associés aux mouvements de translation.

Les organes otolitiques, qui nous intéressent plus particulièrement ici, sont constitués par une pièce de forme sensiblement elliptique, nommée macula 11, laquelle est recouverte par une membrane gélatineuse qui se nomme membrane otolithique 12. Cette membrane otolithique 12 est elle-même recouverte d'une couche 13 de particules de carbonate de calcium appelées otolithes.

Des cellules sensorielles 16, qui sont situés dans la macula 11, portent des cils noyés dans la membrane otolithique 12. Elles portent chacune, à une extrémité, un cil principal appelé kinocil 14, et d'autres cils appelés stéréocils 15.

Lorsque le corps humain subit une accélération dans l'axe de sensibilité d'une cellule sensorielle 16 (c'est-à-dire selon un axe sensiblement orthogonal à l'axe des cils), la couche 13 d'otolithes, qui présente une inertie relativement conséquente, a tendance à rester sur place alors que la base de la macula 11 se déplace avec le reste du corps humain.

Ce faisant, la membrane otolithique 12 se déforme, ce qui produit une inclinaison des cils 14, 15. Cette inclinaison est traduite par les cellules sensorielles 16 sous forme de signaux électriques envoyés vers le système nerveux central, ce qui permet au cerveau d'interpréter une accélération.

Le signal varie selon que les stéréocils 15 s'inclinent vers le kinocil 14 ou à l'opposé de ce dernier, ce qui permet de distinguer entre des accélérations positives et négatives.

On comprend alors que la vitesse du véhicule n'est pas (ou peu) responsable de la réponse sensorielle du système vestibulaire. Toutefois, du fait que le conducteur reçoit aussi des stimuli visuels et auditifs lui permettant de détecter sa vitesse, celle-ci a une influence sur la perception du conducteur et sur le fait que le conducteur ressente une manoeuvre comme agréable ou non.

On comprend également que lorsque le conducteur a la tête inclinée, la pesanteur exerce une force sur les otolithes qui produira une inclinaison des cils, ce qui donnera lieu à une réponse du système vestibulaire. Cette inclinaison, dans un sens ou dans l'autre, pourra donc avoir une influence sur la perception par le conducteur de l'accélération qu'il subit, ce qui pourra altérer la perception de l'agrément de conduite associé à une manoeuvre.

Enfin, on peut diviser les organes otolithiques du système vestibulaire en deux composantes, ici appelées « système vestibulaire soutenu » et « système vestibulaire transitoire ». Ces deux systèmes ont des sensibilités différentes à différents stimuli.

Pour simplifier, on peut considérer que le système vestibulaire soutenu perçoit les composantes de basse fréquence de l'accélération, alors que le système vestibulaire transitoire est plus sensible aux hautes fréquences ainsi qu'aux phases transitoires d'accélération.

En pratique, il ne s'agit pas de deux composantes entièrement distinctes : ces deux composantes correspondent plutôt aux deux extrêmes d'un continuum.

On pourra modéliser ces deux composantes de façon différente de façon à assurer une conduite confortable d'un véhicule automobile 20.

La présente invention propose de tenir compte de la structure de ce système vestibulaire, et notamment de sa structure en deux composantes, pour piloter un véhicule automobile 20 de façon confortable pour les passagers d'un véhicule et notamment pour son conducteur.

Elle propose notamment d'utiliser des seuils pour contrôler l'accélération du véhicule, lesquels seuils seront différents selon que l'accélération du véhicule est constante ou variable.

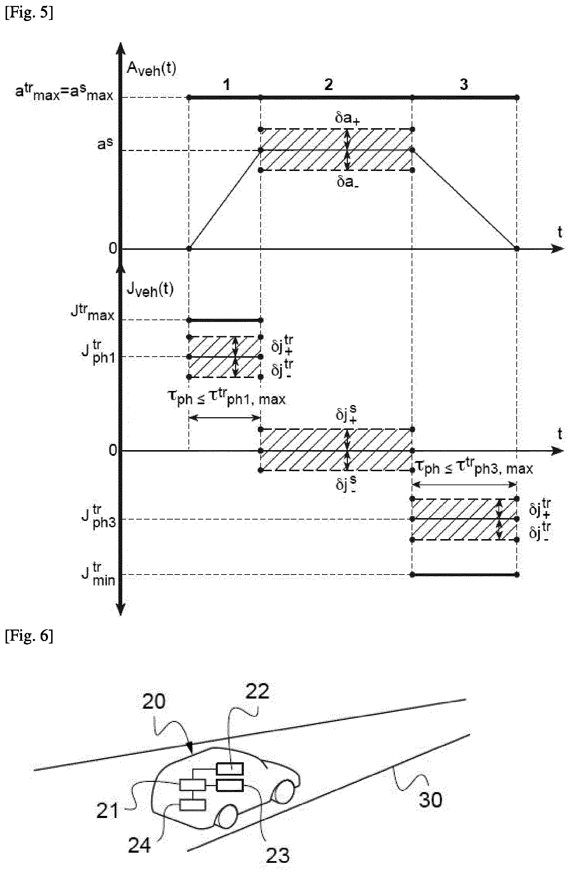

Comme le montre la figure 6, le véhicule automobile 20 ici considéré comporte classiquement un châssis supportant un moteur 22 à combustion interne permettant de faire accélérer le véhicule, un embrayage et une boîte de vitesses 23, des moyens de freinage 24 permettant de faire décélérer le véhicule, et au moins un calculateur 21 adapté à commander de façon autonome les organes précités.

L'invention s'appliquera également aux véhicules à propulsion électrique ou hybride.

Le calculateur 21 est notamment programmé pour mettre en oeuvre le procédé qui sera décrit ci-après. Il est pour cela connecté à au moins un capteur lui permettant de mesurer ou de calculer l'accélération $A_{veh}$ longitudinale subie par le véhicule automobile 20 et la dérivée temporelle de cette accélération $J_{veh}$.

Il est ici programmé pour contrôler chaque consigne émise vers les organes du véhicule qui ont une influence sur l'accélération de ce véhicule. Ce contrôle est effectué de façon à ce que chaque accélération du véhicule soit ressentie par le conducteur comme étant confortable.

Le calculateur 21 pourra par exemple être programmé pour écrêter les valeurs de ces consignes de façon à assurer le confort du conducteur et des passagers du véhicule.

Ce contrôle interviendra alors uniquement à chaque manoeuvre d'évolution qui sera entreprise. Une « manoeuvre » sera ici définie comme un état non stationnaire du véhicule, compris entre deux états quasi-stationnaires du point de vue du ressenti du conducteur. Une manoeuvre peut ainsi être représentée comme une fonction affine par morceaux représentant les variations de l'accélération du véhicule au cours du temps, dont les différents segments correspondent aux différentes phases de la manoeuvre.

Ces manoeuvres correspondent donc à des profils d'accélération, consistant en une suite de phases transitoires et de phases stabilisées d'accélération.

Les phases transitoires, au cours desquelles l'accélération varie de façon linéaire, seront ressenties par le système vestibulaire transitoire.

Au contraire, les phases stabilisées, au cours desquelles l'accélération est sensiblement constante et non nulle, seront ressenties par le système vestibulaire soutenu.

Sur la figure 2, on a représenté une phase d'accélération stabilisée entre deux instants $t_0$ et $t_f$.

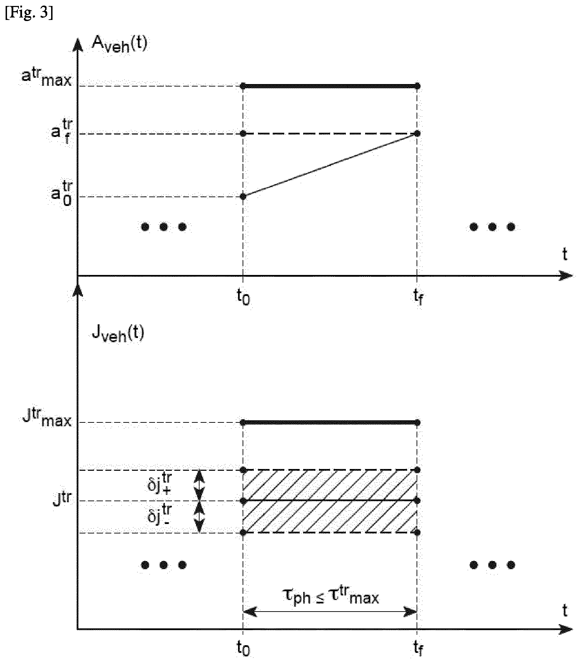

Sur cette figure, ainsi que sur les figures 3 à 5, on a représenté en partie haute les variations de l'accélération $A_{veh}$ du véhicule au cours du temps $t$, et, en partie basse, les variations de la dérivée de l'accélération $J_{veh}$ du véhicule au cours du temps $t$.

Au cours de cette phase d'accélération stabilisée, l'accélération $A_{veh}$ prend une valeur constante $a^s$. Alors, pour garantir l'agrément de conduite durant une telle phase, le calculateur 21 doit s'assurer que la valeur $a^s$ de l'accélération stabilisée ne dépasse pas un seuil maximum d'accélération $a^s_{max}$. Ce seuil maximum d'accélération $a^s_{max}$ peut être identifié empiriquement, en réalisant des tests de confort sur un panel représentatif de personnes.

Au cours de ces tests, on a pu observer que ces personnes sont incapables de distinguer entre deux manoeuvres pour lesquelles l'accélération $A_{veh}$ est très proche. Cette observation se traduit donc par des seuils de tolérance $\delta a_-$, $\delta a_+$ entre lesquels la valeur de l'accélération peut légèrement varier lors des phases stabilisées sans être ressentie comme telle. Ces deux seuils de tolérance $\delta a_-$, $\delta a_+$ sont préférentiellement différents, de façon à traduire la dispersion dans les réponses du système vestibulaire qui est capable de distinguer une variation croissante de l'accélération d'une variation décroissante.

Ces seuils d'accélération $a^s_{max}$ et de tolérance $\delta a_-$, $\delta a_+$ sont donc des valeurs que le calculateur 21 doit veiller à ne pas dépasser lors des phases d'accélération constante.

Au cours de ces phases d'accélération stabilisée, on a également identifié que la dérivée de l'accélération $J_{veh}$ du véhicule, qui est sensiblement nulle, pouvait également légèrement varier sans avoir de conséquence sur le confort du conducteur, pour autant qu'elle reste comprise entre deux seuils de tolérance $\delta j^s_-$, $\delta j^s_+$.

Sur la figure 3, on a représenté une phase d'accélération transitoire, au cours de laquelle la dérivée de l'accélération est considérée constante entre deux instants $t_0$ et $t_f$.

Au cours d'une telle phase, c'est donc le système vestibulaire transitoire qui sera le plus sensible à ces sensations d'à-coup (correspondant au gradient de l'accélération).

Par simplification, nous considérerons ici que, lors des phases transitoires, l'accélération $A_{veh}$ varie de manière linéaire, de sorte que la variation d'accélération (ci-après appelée à-coup $J_{veh}$) est sensiblement constante.

Pour qu'une manoeuvre soit considérée comme acceptable du point de vue du confort du conducteur, le calculateur 21 doit s'assurer que la valeur $J^{tr}$ de l'à-coup transitoire ne dépasse pas un seuil $J^{tr}_{max}$, dont la valeur peut être retrouvée de manière empirique à l'aide de tests réalisés sur un panel représentatif d'individus.

Si on considère en outre que la réponse du système vestibulaire transitoire dépend de la durée du stimulus, le calculateur 21 doit s'assurer que la durée $\tau_{ph}$ de l'à-coup transitoire ne dépasse pas une durée maximum $\tau^{tr}_{max}$.

Il faut considérer cependant que, d'un point de vue physiologique, l'amplitude et la durée de la phase d'accélération transitoire sont toutes deux des paramètres ayant une influence sur la réponse du système nerveux central, de sorte que le calculateur 21 doit déterminer leurs valeurs de façon simultanée ou l'une en fonction de l'autre.

Ici encore, on a pu observer qu'une personne est incapable de distinguer deux manoeuvres dont les valeurs d'à-coup $J_{veh}$ sont très proches. Cette observation se traduit donc par des seuils de tolérance $\delta j^{tr}_-$, $\delta j^{tr}_+$ entre lesquels la valeur de l'à-coup peut légèrement varier lors des phases transitoires sans être ressentie comme telle. Ces deux seuils de tolérance $\delta j^{tr}_-$, $\delta j^{tr}_+$ sont préférentiellement différents, de façon à traduire la dispersion dans les réponses du système vestibulaire qui est capable de distinguer une variation croissante de l'accélération d'une variation décroissante.

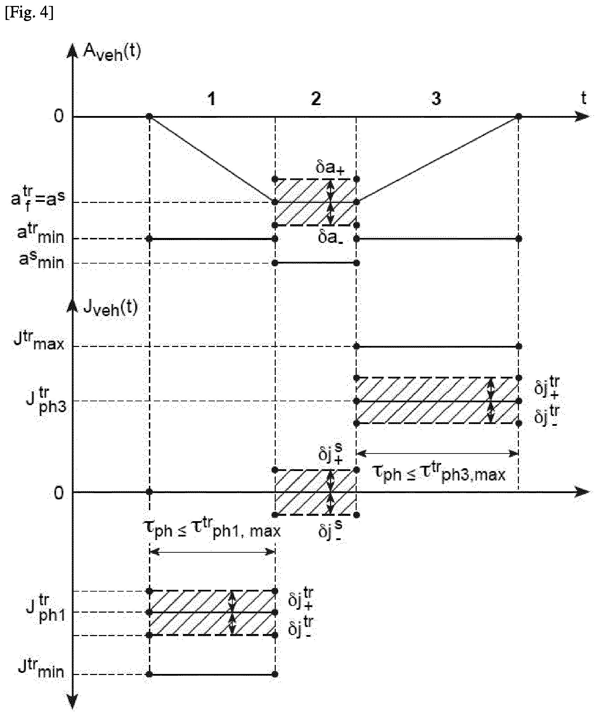

Sur la figure 4, on a représenté un premier exemple d'utilisation pratique de l'invention.

Ce premier exemple consiste en un changement de rapport de boîte de vitesse 23.

Un tel changement de rapport comporte trois manoeuvres successives, à savoir :

- une phase n°1 de décélération transitoire au cours de laquelle le calculateur 21 commande l'ouverture de l'embrayage,
- une phase n°2 d'accélération stabilisée au cours de laquelle le calculateur 21 commande le changement de rapport de boîte de vitesse 23, et

- une phase n°3 d'accélération transitoire au cours de laquelle le calculateur 21 commande la fermeture de l'embrayage.

Sur le haut de la figure 4, on a représenté les variations de l'accélération $A_{veh}$, qui décroît linéairement pendant la première phase, puis qui se stabilise durant la seconde phase, et qui croît linéairement pendant la troisième phase.

On y observe que les seuils d'accélération considérés $a^{tr}_{min}$, $a^s_{min}$ ne sont pas les mêmes pendant les phases transitoires et pendant la phase stabilisée puisque les composantes du système vestibulaire qui sont sensibles pendant ces phases ne sont pas les mêmes.

On notera également que pendant ces deux phases, les seuils d'accélération considérés $a^{tr}_{min}$, $a^s_{min}$ seront des bornes inférieures dont les valeurs pourront être distinctes (en valeurs absolues) des seuils précités $a^{tr}_{max}$, $a^s_{max}$, puisque le système vestibulaire ne réagit pas de la même façon en phase d'accélération et en phase de décélération.

Sur le bas de cette figure 4, on a représenté les variations des à-coups $J_{veh}$, lesquels présentent une valeur sensiblement constante et négative pendant la première phase, une valeur sensiblement nulle pendant la seconde phase et une valeur sensiblement constante et positive au cours de la troisième phase.

On y observe que les seuils d'à-coups $J^{tr}_{max}$, $J^{tr}_{min}$ ne sont pas les mêmes pendant les deux phases transitoires, du fait que le système vestibulaire ne réagit pas de la même façon selon le signe de la valeur de l'à-coup.

Pour des raisons homologues, on y observe également que les seuils de tolérance $\delta j^{tr}_-$, $\delta j^{tr}_+$, $\delta j^s_-$, $\delta j^s_+$ ne sont pas les mêmes pendant les phases transitoires et pendant la phase stabilisée.

Lors de la première phase, le calculateur 21 doit s'assurer que ni l'accélération, ni l'à-coup ne descendent en dessous des seuils $a^{tr}_{min}$, $J^{tr}_{min}$. Pendant cette phase, il doit également contrôler que l'à-coup reste à l'intérieur des seuils de tolérance $\delta j^{tr}_-$, $\delta j^{tr}_+$. Enfin, cette phase ne doit pas dépasser une durée $\tau^{tr}_{ph1, max}$.

Si jamais les consignes élaborées pour piloter l'embrayage et la boîte de vitesse 23 ne respectaient pas ces conditions, le calculateur 21 pourrait par exemple modifier la vitesse d'ouverture et de fermeture de l'embrayage de manière à finalement respecter ces conditions.

Lors de la deuxième phase, le calculateur 21 doit s'assurer que la décélération due au fait que l'embrayage est ouvert ne dépasse pas un seuil $a^s_{min}$ et qu'elle reste à l'intérieur de la zone définie par les seuils de tolérance $\delta a_-$, $\delta a_+$. De la même façon, l'à-coup, qui est sensiblement nul pendant cette phase, ne doit pas sortir de la zone définie par les seuils de tolérance $\delta j^s_-$, $\delta j^s_+$.

Lors de la troisième phase, le calculateur 21 doit s'assurer que l'accélération ne passe pas en dessous du seuil $a^{tr}_{min}$ et que l'à-coup ne passe pas au-dessus du seuil $J^{tr}_{min}$. Pendant cette phase, il doit également contrôler que l'à-coup reste à l'intérieur des seuils de tolérance $\delta j^{tr}_-$, $\delta j^{tr}_+$. Enfin, cette phase ne doit pas dépasser une durée $\tau^{tr}_{ph3,\,max}$.

Si jamais les consignes élaborées pour piloter l'embrayage et la boîte de vitesse 23 ne respectaient pas ces conditions, le calculateur 21 pourrait par exemple modifier la vitesse de fermeture de l'embrayage, le choix du rapport de vitesse, ainsi que le régime et le couple du groupe motopropulseur de manière à finalement respecter ces conditions.

Sur la figure 5, on a représenté un second exemple d'utilisation pratique de l'invention.

Ce second exemple consiste en un changement de régime et/ou de couple du moteur 22, pouvant intervenir par exemple en cas de transition entre deux vitesses réglementaires sur une portion de route à pente constante et en ligne droite, ou en cas de variation de pente à vitesse constante, ou en cas de freinage dû au fait que le véhicule rattrape un véhicule plus lent après une phase de roulage à vitesse constante.

Un tel changement de régime et/ou de couple comporte trois manoeuvres successives, à savoir :

- une phase n°1 d'accélération transitoire au cours de laquelle le calculateur 21 commande l'accélération du véhicule (en cas par exemple d'appui sur la pédale d'accélérateur),
- une phase n°2 d'accélération stabilisée (en cas par exemple de maintien de l'appui sur la pédale d'accélérateur), et
- une phase n°3 d'accélération transitoire au cours de laquelle le calculateur 21 commande l'arrêt de l'accélération du véhicule (en cas par exemple de retour de la pédale d'accélérateur en position d'équilibre).

Sur le haut de la figure 5, on a représenté les variations de l'accélération $A_{veh}$, qui croît linéairement pendant la première phase, puis qui se stabilise durant la seconde phase, et qui décroît linéairement pendant la troisième phase.

Sur le bas de cette figure 5, on a représenté les variations des à-coups $J_{veh}$, lesquelles présentent une valeur sensiblement constante et positive pendant la première phase, une valeur sensiblement nulle pendant la seconde phase et une valeur sensiblement constante et négative au cours de la troisième phase.

Comme dans le cas de la figure 4, le calculateur 21 vérifie que les consignes transmises au moteur 22 sont telle que l'accélération et les à-coups ne dépassent pas des seuils prédéterminés.

Ainsi, lors de la première phase, le calculateur 21 doit s'assurer que ni l'accélération, ni l'à-coup ne dépassent des seuils $a^{tr}_{max}$, $J^{tr}_{max}$. Pendant cette phase, il doit également contrôler que l'à-coup reste à l'intérieur des seuils de tolérance $\delta j^{tr}_-$, $\delta j^{tr}+$. Finalement, cette phase ne doit pas dépasser une durée $\tau^{tr}_{ph1,max}$.

Lors de la deuxième phase, le calculateur 21 doit s'assurer que l'accélération ne dépasse pas un seuil $a^s_{max}$ et qu'elle reste à l'intérieur de la zone définie par les seuils de tolérance $\delta a_-$, $\delta a_+$. De la même façon, l'à-coup, qui est sensiblement nul pendant cette phase, ne doit pas sortir de la zone définie par les seuils de tolérance $\delta j^s_-$, $\delta j^s_+$.

Lors de la troisième phase, le calculateur 21 doit s'assurer que la décélération ne passe pas au-dessus du seuil $a^{tr}_{max}$ et que l'à-coup ne passe pas en-dessous du seuil $J^{tr}_{min}$. Pendant cette phase, il doit également contrôler que l'à-coup reste à l'intérieur des seuils de tolérance $\delta j^{tr}_-$, $\delta j^{tr}_+$. Finalement, cette phase ne doit pas dépasser une durée $\tau^{tr}_{ph3,\,max}$.

En plus de l'accélération longitudinale du véhicule, le conducteur subi d'autres phénomènes qui peuvent altérer sa perception de l'accélération qu'il subit.

Comme cela a été expliqué supra, l'un de ces phénomènes est physiologique et est associé à l'inclinaison de sa tête (et donc à l'inclinaison du véhicule) qui peut produire un effet similaire à celui produit par une accélération du véhicule.

Un autre de ces phénomènes est psychologique et est lié à la vitesse perçue par le conducteur de façon visuelle et auditive, ce qui a un effet sur l'interprétation par le conducteur d'une accélération comme étant agréable ou non.

Pour prendre en compte le premier phénomène, nous pouvons définir « l'accélération ressentie $a_{drv}$ » du conducteur comme étant l'accélération que le conducteur ressentirait s'il avait des retours visuels et auditifs propres à lui laisser penser qu'il roule à une vitesse dont la variation est modérée.

Ainsi, l'accélération ressentie $a_{drv}$ serait une fonction de l'accélération $A_{veh}$ du véhicule, de la pente $\theta_{route}$ de la route empruntée et de la vitesse $V_{veh}$ du véhicule, ce qu'on pourrait écrire :

[Math. 1]
$$a_{drv} = f(A_{veh}, \theta_{route}, V_{veh})$$

En supposant que l'inclinaison de la route est modérée, on peut simplifier l'expression précitée en écrivant :

[Math. 2]
$$a_{drv} = A_{veh} + A_{pente}, \text{ avec } A_{pente} = g \cdot \sin(\theta_{route})$$

Alors, pour tenir compte de ce premier phénomène, le calculateur 21 pourra considérer dans les deux exemples précités non pas l'accélération $A_{veh}$ du véhicule mais plutôt cette accélération ressentie $a_{drv}$.

Ceci reviendrait à comparer l'accélération $A_{veh}$ avec un seuil qui varie en fonction de la pente de la route 30 empruntée par le véhicule automobile 20.

Pour tenir compte du second phénomène, lequel est plus complexe, le calculateur 21 pourra considérer encore une autre accélération. Il y aura en effet des valeurs d'accélération qui ne seront plus acceptables par le conducteur à vitesse élevée, alors qu'elles le seraient à vitesse modérée. Ces valeurs peuvent être déterminées empiriquement, au moyen de tests réalisés sur un panel représentatif d'individus.

Ainsi, de façon plus générale, pour prendre en compte l'effet de la pente $\theta_{route}$ de la route et de la vitesse $V_{veh}$ du véhicule, on peut introduire une dépendance entre les différents seuils d'accélération, qui pourraient être enregistrée dans le calculateur 21 sous forme de cartographies. Ainsi, au moment de réaliser une manoeuvre, les seuils seraient mis à jour au moyen des formules mathématiques suivantes:

$$[\text{Math. 3}]$$
$$a^{tr}_{min} = f_1 \left( \theta_{route}, V_{veh} \right)$$
$$a^s_{min} = f_2 \left( \theta_{route}, V_{veh} \right)$$
$$a^{tr}_{max} = f_3 \left( \theta_{route}, V_{veh} \right)$$
$$a^s_{max} = f_4 \left( \theta_{route}, V_{veh} \right)$$

On pourrait procéder de la même manière avec les seuils d'à-coups, mais en tenant compte de la dérivée de l'inclinaison $\theta_{route}$ de la route.

La présente invention n'est nullement limitée aux exemples de réalisation décrits et représentés, mais l'homme du métier saura y apporter toute variante conforme à l'invention.

Ainsi, à titre d'exemple, on pourrait utiliser non pas un seul calculateur 21 comme exposé ci-dessus afin de mettre en oeuvre l'invention, mais deux systèmes en interaction, à savoir :

- un système gestionnaire des phases d'accélération, et
- un système exécuteur desdites phases.

Le système gestionnaire pourrait être adapté à définir les valeurs nominales d'accélération et d'à-coup des différentes phases, et le système exécuteur pourrait être adapté à exécuter chaque phase, en émettant des consignes de pilotage des différents organes associés à l'accélération pendant la manoeuvre, tout en s'assurant que les valeurs d'accélération et d'à-coup restent toujours à l'intérieur des seuils de tolérance prévus.

Ainsi, dans l'exemple précité de changement de rapport de boîte de vitesse 23, le système gestionnaire sera adapté à figer des consignes d'accélération et d'à-coup pour chaque phase qui respectent les différents seuils d'agrément et permettront un passage de vitesse rapide. Le système exécuteur prendra en entrée ces consignes et commandera les organes pour faire en sorte que les consignes soient respectées et qu'elles restent toujours à l'intérieur de zones de tolérance définies.

Dans l'exemple précité de changement de régime et/ou de couple, le système gestionnaire sera adapté à s'assurer que les valeurs des différentes consignes d'accélération permettent de faire varier la vitesse du véhicule de la façon souhaitée. Le système exécuteur sera quant à lui adapté à récupérer la consigne issue du gestionnaire de manoeuvres et à exécuter une commande sur la dynamique du véhicule en s'assurant que les valeurs d'accélération et d'à-coup soient toujours confinées aux zones de tolérance prédéfinies.

**Revendications**

1. Procédé d'élaboration d'une consigne de pilotage d'un organe de commande (22, 23, 24) d'un véhicule automobile (20) qui est adapté à faire varier l'accélération du véhicule automobile (20), ladite consigne étant élaborée en fonction d'un modèle mathématique tenant compte de la réponse nerveuse du système vestibulaire humain à une accélération ($A_{veh}$), **caractérisé en ce que** ledit modèle mathématique tient compte du fait que la réponse nerveuse du système vestibulaire humain à une accélération ($A_{veh}$) est différente selon que l'accélération ($A_{veh}$) est sensiblement constante ou est variable.

2. Procédé d'élaboration selon la revendication précédentes, dans lequel ladite consigne est élaborée de façon à ce que l'accélération ($A_{veh}$) du véhicule automobile (20) et/ou la dérivée temporelle de l'accélération ($J_{veh}$) du véhicule automobile (20) soit, en valeur absolue, inférieure à un seuil ($a^s_{max}$, $a^{tr}_{max}$, $J^{tr}_{max}$, $a^s_{min}$, $a^{tr}_{min}$, $J^{tr}_{min}$) déterminé.

3. Procédé d'élaboration selon la revendication précédentes, dans lequel ledit seuil ($a^s_{max}$, $a^{tr}_{max}$, $a^s_{min}$, $a^{tr}_{min}$) n'est pas le même selon que l'accélération ($A_{veh}$) est sensiblement constante ou est variable.

4. Procédé d'élaboration selon l'une des deux revendications précédentes, dans lequel ledit seuil ($a^s_{max}$, $a^{tr}_{max}$, $J^{tr}_{max}$, $a^s_{min}$, $a^{tr}_{min}$, $J^{tr}_{min}$) n'est pas le même si l'accélération ($A_{veh}$) du véhicule automobile (20) et/ou la dérivée temporelle de l'accélération ($J_{veh}$) du véhicule automobile (20) est positive ou négative.

5. Procédé d'élaboration selon l'une des trois revendications précédentes, dans lequel, le véhicule automobile (20) roulant sur une route, ledit seuil ($a^s_{max}$, $a^{tr}_{max}$, $J^{tr}_{max}$, $a^s_{min}$, $a^{tr}_{min}$, $J^{tr}_{min}$) est déterminé en fonction de la pente de la route et/ou en fonction de la vitesse du véhicule automobile (20).

6. Procédé d'élaboration selon l'une des revendications précédentes, dans lequel il est prévu d'anticiper une manoeuvre d'évolution du véhicule automobile (20), tel que par exemple un changement de régime-moteur ou un changement de rapport de boîte de vitesse, en la discrétisant en différentes phases au cours de chacune desquelles l'accélération ($A_{veh}$) du véhicule automobile (20) est considérée soit sensiblement constante, soit variant de façon linéaire.

7. Procédé d'élaboration selon la revendication précédente, dans lequel, lors des phases où l'accélération ($A_{veh}$) du véhicule automobile (20) est anticipée comme étant sensiblement constante, ladite consigne est élaborée de façon à ce que l'accélération ($A_{veh}$) du véhicule automobile (20) et/ou la dérivée temporelle de l'accélération ($J_{veh}$) du véhicule automobile (20) reste comprise entre deux seuils de tolérance ($\delta a_-$, $\delta a_+$, $\delta j^s_-$, $\delta j^s_+$).

8. Procédé d'élaboration selon la revendication précédente, dans lequel, lors des phases où l'accélération ($A_{veh}$) du véhicule automobile (20) est anticipée comme étant variable, ladite consigne est élaborée de façon à ce que la variation de dérivée temporelle de l'accélération ($J_{veh}$) du véhicule automobile (20) reste comprise entre deux seuils de tolérance ($\delta j^{tr}_-$, $\delta j^{tr}_+$) différents des seuils de tolérance ($\delta j^s_-$, $\delta j^s_+$) utilisés lors des phases où l'accélération ($A_{veh}$) du véhicule automobile (20) est anticipée comme étant sensiblement constante.

9. Véhicule automobile (20) comportant au moins un organe de commande (22, 23, 24) qui est adapté à faire varier l'accélération du véhicule automobile (20), **caractérisé en ce qu'**il comporte un calculateur (21) adapté à mettre en oeuvre un procédé d'élaboration d'une consigne de pilotage dudit organe de commande (22, 23, 24) conforme à l'une des revendications précédentes.

**Patentansprüche**

1. Verfahren zur Erzeugung eines Sollwerts zur Ansteuerung eines Steuerorgans (22, 23, 24) eines Kraftfahrzeugs (20), das geeignet ist, die Beschleunigung des Kraftfahrzeugs (20) variieren zu lassen, wobei der Sollwert in Abhängigkeit von einem mathematischen Modell erzeugt wird, das die Nervenreaktion des menschlichen Gleichgewichtssystems auf eine Beschleunigung ($A_{veh}$) berücksichtigt, **dadurch gekennzeichnet, dass** das mathematische Modell die Tatsache berücksichtigt, dass die Nervenreaktion des menschlichen Gleichgewichtssystems auf eine Beschleunigung ($A_{veh}$) je nachdem, ob die Beschleunigung ($A_{veh}$) im Wesentlichen konstant ist oder variabel ist, unterschiedlich ist.

2. Verfahren zur Erzeugung nach dem vorhergehenden Anspruch, bei dem der Sollwert so erzeugt wird, dass die Beschleunigung ($A_{veh}$) des Kraftfahrzeugs (20) und/oder die Zeitableitung der Beschleunigung ($J_{veh}$) des Kraftfahrzeugs (20), als absoluter Wert, geringer als ein bestimmter Schwellenwert ($a^s_{max}$, $a^{tr}_{max}$, $J^{tr}_{max}$, $a^s_{min}$, $a^{tr}_{min}$, $J^{tr}_{min}$) ist.

3. Verfahren zur Erzeugung nach dem vorhergehenden Anspruch, bei dem der Schwellenwert ($a^s_{max}$, $a^{tr}_{max}$, $a^s_{min}$, $a^{tr}_{min}$) je nachdem, ob die Beschleunigung ($A_{veh}$) im Wesentlichen konstant ist oder variabel ist, nicht der Gleiche ist.

4. Verfahren zur Erzeugung nach einem der beiden vorhergehenden Ansprüche, bei dem der Schwellenwert ($a^s_{max}$, $a^{tr}_{max}$, $J^{tr}_{max}$, $a^s_{min}$, $a^{tr}_{min}$, $J^{tr}_{min}$) nicht der Gleiche ist, wenn die Beschleunigung ($A_{veh}$) des Kraftfahrzeugs (20) und/oder die Zeitableitung der Beschleunigung ($J_{veh}$) des Kraftfahrzeugs (20) positiv oder negativ ist.

5. Verfahren zur Erzeugung nach einem der drei vorhergehenden Ansprüche, bei dem, wenn das Kraftfahrzeug (20) auf einer Straße fährt, der Schwellenwert ($a^s_{max}$, $a^{tr}_{max}$, $J^{tr}_{max}$, $a^s_{min}$, $a^{tr}_{min}$, $J^{tr}_{min}$) in Abhängigkeit vom Gefälle der Straße und/oder in Abhängigkeit von der Geschwindigkeit des Kraftfahrzeugs (20) bestimmt wird.

6. Verfahren zur Erzeugung nach einem der vorhergehenden Ansprüche, bei dem vorgesehen ist, ein Änderungsmanöver des Kraftfahrzeugs (20) wie etwa einen Motordrehzahlwechsel oder einen Schaltgetriebe-Gangwechsel zu antizipieren, indem es in verschiedene Phasen diskretisiert wird, in deren Verlauf jeweils die Beschleunigung ($A_{veh}$) des Kraftfahrzeugs (20) entweder als im Wesentlichen konstant oder als linear variierend betrachtet wird.

7. Verfahren zur Erzeugung nach dem vorhergehenden Anspruch, bei dem bei Phasen, in denen die Beschleunigung ($A_{veh}$) des Kraftfahrzeugs (20) als im Wesentlichen konstant seiend antizipiert wird, der Sollwert so erzeugt wird, dass die Beschleunigung ($A_{veh}$) des Kraftfahrzeugs (20) und/oder die Zeitableitung der Beschleunigung ($J_{veh}$) des Kraftfahrzeugs (20) zwischen zwei Toleranzschwellenwerten ($\delta a_-$, $\delta a_+$, $\delta j^s_-$, $\delta j^s_+$) bleibt.

8. Verfahren zur Erzeugung nach dem vorhergehenden Anspruch, bei dem bei Phasen, in denen die Beschleunigung ($A_{veh}$) des Kraftfahrzeugs (20) als variabel seiend antizipiert wird, der Sollwert so erzeugt wird, dass die Variation der Zeitableitung der Beschleunigung ($J_{veh}$) des Kraftfahrzeugs (20) zwischen zwei Toleranzschwellenwerten ($\delta j^{tr}_-$, $\delta j^{tr}_+$) bleibt, die verschieden von den Toleranzschwellenwerten ($\delta j^s_-$, $\delta j^s_+$) sind, die bei Phasen verwendet werden, in denen die Beschleunigung ($A_{veh}$) des Kraftfahrzeugs (20) als im Wesentlichen konstant seiend antizipiert wird.

9. Kraftfahrzeug (20), umfassend mindestens ein Steuerorgan (22, 23, 24), das geeignet ist, die Beschleunigung des Kraftfahrzeugs (20) variieren zu lassen, **dadurch gekennzeichnet, dass** es einen Rechner (21) umfasst, der geeignet ist, ein Verfahren zur Erzeugung eines Sollwerts zur Ansteuerung des Steuerorgans (22, 23, 24) gemäß einem der vorhergehenden Ansprüche umzusetzen.

**Claims**

1. Method for generating a control setting for a control member (22, 23, 24) of a motor vehicle (20) that is configured to vary the acceleration of the motor vehicle (20), this setting being generated according to a mathematical model taking into account the nervous response of the human vestibular system to an acceleration ($A_{veh}$), **characterized in that** said mathematical model takes into account the fact that the nervous response of the human vestibular system to an acceleration ($A_{veh}$) is different depending on whether the acceleration ($A_{veh}$) is substantially constant or is variable.

2. Generating method according to the preceding claim, wherein said setting is generated in such a way that the acceleration ($A_{veh}$) of the motor vehicle (20) and/or the time derivative of the acceleration ($J_{veh}$) of the motor vehicle (20) is, in absolute value, less than a defined threshold ($a^s_{max}$, $a^{tr}_{max}$, $J^{tr}_{max}$, $a^s_{min}$, $a^{tr}_{min}$, $J^{tr}_{min}$).

3. Generating method according to the preceding claim, wherein said threshold ($a^s_{max}$, $a^{tr}_{max}$, $a^s_{min}$, $a^{tr}_{min}$) is not the same depending on whether the acceleration ($A_{veh}$) is substantially constant or is variable.

4. Generating method according to one of the two preceding claims, wherein said threshold ($a^s_{max}$, $a^{tr}_{max}$, $J^{tr}_{max}$, $a^s_{min}$, $a^{tr}_{min}$, $J^{tr}_{min}$) is not the same if the acceleration ($A_{veh}$) of the motor vehicle (20) and/or the time derivative of the acceleration ($J_{veh}$) of the motor vehicle (20) is positive or negative.

5. Generating method according to one of the three preceding claims, wherein, the motor vehicle (20) being driven on a road, said threshold ($a^s_{max}$, $a^{tr}_{max}$, $J^{tr}_{max}$, $a^s_{min}$, $a^{tr}_{min}$, $J^{tr}_{min}$) is defined depending on the slope of the road and/or depending on the velocity of the motor vehicle (20).

6. Generating method according to one of the preceding claims, wherein provision is made to anticipate a variational manoeuvre of the motor vehicle (20), such as for example a change in engine speed or a gearbox gearshift, by discretizing it into various phases in the course of each of which the acceleration ($A_{veh}$) of the motor vehicle (20) is considered either to be substantially constant, or to vary linearly.

7. Generating method according to the preceding claim, wherein, in phases in which the acceleration ($A_{veh}$) of the motor vehicle (20) is anticipated as being substantially constant, said setting is generated in such a way that the acceleration ($A_{veh}$) of the motor vehicle (20) and/or the time derivative of the acceleration ($J_{veh}$) of the motor vehicle (20) remains between two tolerance thresholds ($\delta a_-$, $5a_+$, $\delta j^s_-$, $\delta j^s_+$).

8. Generating method according to the preceding claim, wherein, in phases in which the acceleration ($A_{veh}$) of the motor vehicle (20) is anticipated as being variable, said setting is generated in such a way that the variation in the time derivative of the acceleration ($J_{veh}$) of the motor vehicle (20) remains between two tolerance thresholds ($\delta j^{tr}_-$, $\delta j^{tr}_+$) that are different from the tolerance thresholds ($\delta j^s_-$, $\delta j^s_+$) used in phases in which the acceleration ($A_{veh}$) of the motor vehicle (20) is anticipated as being substantially constant.

9. Motor vehicle (20) comprising at least one control member (22, 23, 24) that is configured to make the acceleration of the motor vehicle (20) vary, **characterized in that** it comprises a computer (21) configured to implement a method for generating a control setting for said control member (22, 23, 24) according to one of the preceding claims.

[Fig. 1]

[Fig. 2]

[Fig. 3]

[Fig. 4]

[Fig. 5]

[Fig. 6]

## RÉFÉRENCES CITÉES DANS LA DESCRIPTION

### Documents brevets cités dans la description

- CN 108639061 A

### Littérature non-brevet citée dans la description

- **BELLEM, HANNA ; SCHÔNENBERG, THORBEN ; KREMS, JOSEF F. et al.** Objective metrics of comfort: developing a driving style for highly automated vehicles. *Transportation research part F: traffic psychology and behaviour,* 2016, vol. 41, 45-54

- **BELLEM, HANNA ; THIEL, BARBARA ; SCHRAUF, MICHAEL et al.** Comfort in automated driving: An analysis ofpreferences for different automated driving styles and their dependence on personality traits. *Transportation research part F: traffic psychology and behaviour,* 2018, vol. 55, 90-100